(19) Europäisches Patentamt
European Patent Office
Office européen des brevets

(11) EP 2 879 262 A1

(12) **EUROPEAN PATENT APPLICATION**
published in accordance with Art. 153(4) EPC

(43) Date of publication:
**03.06.2015 Bulletin 2015/23**

(21) Application number: **13823736.7**

(22) Date of filing: **22.07.2013**

(51) Int Cl.:
***H02J 3/38*** *(2006.01)*

(86) International application number:
**PCT/JP2013/069739**

(87) International publication number:
**WO 2014/017417 (30.01.2014 Gazette 2014/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.07.2012 JP 2012165409**

(71) Applicant: **Origin Electric Company, Limited**
**Tokyo 171-8555 (JP)**

(72) Inventors:
- **OHSHIMA Masaaki**
  **Tokyo 171-8555 (JP)**
- **USHIKI Shuichi**
  **Tokyo 171-8555 (JP)**

(74) Representative: **Uchida, Kenji et al**
**Fédit-Loriot**
**38, avenue Hoche**
**75008 Paris (FR)**

# (54) DISTRIBUTED POWER SYSTEM AND OPERATION METHOD

(57) [Problem] To provide a distributed power system capable of continuously supplying electric power to a load even when a system voltage of the electric power system becomes abnormal.

[Solution] A DC/DC converter (11) converts DC current generated by solar power generation facility to DC current with a predetermined output voltage, and an inverter (12) converts the DC current converted by the DC/DC converter (11) to an AC current which is output to a electric power system (15) via a system interconnect switch (14). When the system voltage of the electric power system (15) is abnormal, a control device (20) makes the system interconnect switch (14) open to switch operation modes of the DC/DC converter (11) and inverter (12) to a self-sustaining operation without stopping the DC/DC converter (11) and inverter (12), and supplies electric power to a load (17) connected between the inverter (1) and the system interconnect switch (14).

【Fig.1】

PV PANEL
DC/DC CONVERTER
INVERTER
LOAD
VL
Va
VT
V
13
11
12
17
16
14
21
15
20
CONTROL DEVICE
32
LOAD SWITCHING UNIT
29
SYSTEM VOLTAGE MONITORING UNIT
30
SYSTEM INTERCONNECT UNIT
31
MODE SWITCHING UNIT
23
CONVERTER CONTROL DEVICE
24
MPPT CONTROL UNIT
FIRST LINK VOLTAGE CONTROL UNIT
25
26
INVERTER CONTROL DEVICE
27
SECOND LINK VOLTAGE CONTROL UNIT
AC VOLTAGE CONTROL UNIT
28

EP 2 879 262 A1

## Description

Technical Field

The present invention relates to a distributed power system connected to an electric power system and supplying the electric power system with electric power generated by solar power generation facility, and an operation method.

Background Art

A distributed power system having solar power generation facility is connected with an electric power system, and DC electric power generated by the solar power generation facility is converted into AC electric power through a power conditioner, and is supplied to the electric power system. In connection with the distributed power system as described above, there is a distributed power system in which, when abnormality occurs in a system voltage of the electric power system, the distributed power system is disconnected from the electric power system to stop an interconnecting operation, and the distributed power system is made to perform a self-sustaining operation (see, for example, Patent Literature 1).

Furthermore, when the system voltage returns to a normal state during the self-sustaining operation, the power conditioner is temporarily stopped to discontinue the self-sustaining operation. Then, the power conditioner is activated and the distributed power system is connected to the electric power system to resume the interconnecting operation.

Citation List

Patent Literature

PTL 1: Japanese Patent Application Laid-Open Publication No. H11-341686

Summary of Invention

Technical Problem

However, with the conventional distributed power system, since the power conditioner is stopped when the system voltage of the electric power system is abnormal, the electric power supplied to a load is stopped in the case where the load is connected to the distributed power system. Even if the self-sustaining operation is performed to supply the load with the electric power after the power conditioner is stopped, the supply of electric power to the load is temporarily interrupted.

Furthermore, when the system voltage returns to a normal state during the self-sustaining operation by the distributed power system, the power conditioner is temporarily stopped to discontinue the self-sustaining operation, and then, the power conditioner is activated to connect the distributed power system to the electric power system and to resume the interconnecting operation. Hence, in this case, the supply of electric power to the load is also temporarily interrupted.

An object of the present invention is to provide a distributed power system and an operation method, which can continuously supply electric power to the load even when the system voltage of the electric power system becomes abnormal.

Solution to Problem

A distributed power system according to an invention of claim 1 includes: a DC/DC converter that converts a direct current generated by a solar power generation facility into the direct current with a predetermined output voltage; an inverter that converts the direct current converted by the DC/DC converter into an alternating current and outputs the alternating current to a electric power system via a system interconnect switch; and a control device that switches operation modes of the DC/DC converter and the inverter, and makes the DC/DC converter and the inverter shift to a self-sustaining operation without stopping them, when the system voltage of the electric power system is abnormal.

According to the distributed power system of an invention of claim 2, in the invention of claim 1, the control device includes: a system voltage monitoring unit configured to monitor whether or not the system voltage of the electric power system is normal; a converter control device that controls the DC/DC converter with a maximum power point tracking control mode in which electric power generated by the solar power generation facility is the maximum, or with a link voltage constant control mode in which a link voltage between the DC/DC converter and the inverter is controlled to a predetermined value; an inverter control device that controls the inverter with an AC output voltage control mode in which an output voltage of the inverter is controlled to a predetermined value, or with a link voltage constant control mode in which a link voltage between the DC/DC converter and the inverter is controlled to a predetermined value; and a mode switching unit configured to switch control modes of the converter control device and the inverter control device, and switches operation modes of the DC/DC converter and the inverter; in which the mode switching unit sets a control mode of the converter control device to the maximum power point tracking control mode in which electric power generated by the solar power generation facility is the maximum, and sets a control mode of the inverter control device to the link voltage constant control, when the system voltage monitoring unit determines that the system voltage of the electric power system is normal; and switches the control mode of the converter control device from the maximum power point tracking control mode to the link voltage constant control mode, and switches the control mode of the inverter control device from the link voltage constant control mode to the AC output voltage control mode in which the output voltage of the inverter is controlled to a predetermined value, when the system voltage monitoring unit determines that the system voltage of the electric power system is abnormal.

The distributed power system of an invention of claim 3, in the invention of claim 2, further includes: a battery that stores a direct current converted by the DC/DC converter or a direct current converted by the inverter from an alternating current of the electric power system; and a charger/discharger that controls charging or discharging of the battery, in which: the control device includes a charger/discharger control device that controls the charger/discharger with a charging/discharging control mode in which the charging or discharging of the battery is controlled, or with a link voltage constant control mode in which a link voltage between the DC/DC converter and the inverter is controlled to a predetermined value; and in which the mode switching unit sets the control mode of the charger/discharger by the charger/discharger control device to the charging/discharging control mode, when the system voltage monitoring unit determines that the system voltage of the electric power system is normal; and makes the control mode by the converter control device remain in the maximum power point tracking control mode, and switches the control mode of the charger/discharger from the charging/discharging control mode to the link voltage constant control mode, when the system voltage monitoring unit determines that the system voltage of the electric power system is abnormal.

According to the distributed power system of an invention of claim 4, in the invention of claim 3, when the system voltage monitoring unit determines that the system voltage of the electric power system is abnormal, the mode switching unit makes the control mode of the charger/discharger remain in the charging/discharging control control, and switches the control mode of the DC/DC converter from the maximum power point tracking control mode to the link voltage constant control mode, in place of making the control mode by the converter control device remain in the maximum power point tracking control mode, and switching the control mode of the charger/discharger from the charging/discharging control mode to the link voltage constant control mode.

An operation method of a distributed power system according to an invention of claim 5 includes the steps of: converting, by a DC/DC converter, a direct current generated by a solar power generation facility into the direct current with a predetermined output voltage; converting, by an inverter, the direct current converted by the DC/DC converter into alternating current and outputting the alternating current to a electric power system via a system interconnect switch; and switching operation modes of the DC/DC converter and the inverter when a system voltage of the electric power system is abnormal; and making the DC/DC converter and the inverter shift to a self-sustaining operation without stopping them.

An operation method of a distributed power system according to an invention of claim 6, which converts, by a DC/DC converter, a direct current generated by a solar power generation facility into the direct current with a predetermined output voltage, converts, by an inverter, the direct current converted by the DC/DC converter into alternating current, and outputs the alternating current to a electric power system via a system interconnect switch, the method including the steps of: setting an operation mode of the DC/DC converter to a maximum power point tracking control mode in which electric power generated by the solar power generation facility is the maximum, and setting an operation mode of the inverter to a link voltage constant control mode in which a link voltage between the DC/DC converter and the inverter is controlled to a predetermined value, when a system voltage of the electric power system is normal; and switching the operation mode of the DC/DC converter from the maximum power point tracking control mode to the link voltage constant control mode, and switching the operation mode of the inverter from the link voltage constant control mode to an AC output voltage control mode in which the output voltage of the inverter is controlled to a predetermined value, when the system voltage of the electric power system is abnormal.

According to the operation method of a distributed power system of an invention of claim 7, in the invention of claim 6, further comprising the steps of: in the case where a battery that stores the direct current converted by the DC/DC converter or the direct current converted from the alternating current of the electric power system by the inverter is provided, setting an operation mode of the battery to a charging/discharging control mode when a system voltage of the electric power system is normal; and making the operation mode of the DC/DC converter to remain in the maximum power point tracking control mode and switching the operation mode of the battery from the charging/discharging control mode to the link voltage constant control mode when the system voltage of the electric power system is abnormal.

According to the method of operating a distributed power system of an invention of claim 8, in the invention of claim 7, further including the steps of: when the system voltage of the electric power system is determined to be abnormal, making the operation mode of the battery remain in the charging/discharging control control, and switching the operation mode of the DC/DC converter from the maximum power point tracking control mode to the link voltage constant control mode, in place of making the operation mode of DC/DC converter remain in the maximum power point tracking control mode, and switching the operation mode of the battery from the charging/discharging control mode to the link voltage constant control mode.

Advantageous Effects of Invention

According to the invention of claims 1 and 5, when the system voltage of the electric power system is abnormal, the system interconnect switch is made open, and the operation mode of each of the DC/DC converter and the inverter is switched to perform the self-sustaining operation without stopping the DC/DC converter and the inverter to supply electric power to the load. Thus, it is possible to continuously supply the electric power to the load even when the system voltage of the electric power system becomes abnormal.

According to the invention of claims 2 and 6, in addition to the effect obtained by the invention of claims 1 and 5, when the system voltage of the electric power system is abnormal, the control device switches the operation mode of the DC/DC converter from the maximum power point tracking control to the link voltage constant control, the operation mode of the inverter is switched from the link voltage constant control by the AC current control to the AC output voltage control with which the output voltage of the inverter is controlled to a predetermined value. Thus, it is possible to make the voltage applied to the load 17 to be the predetermined voltage (rated voltage) while controlling the link voltage to be constant.

According to the invention of claims 3 and 7, in addition to the effect obtained by the invention of claims 2 and 6, in the case where the battery is provided, when the system voltage of the electric power system is abnormal, the operation mode of the DC/DC converter is made to remain in the maximum power point tracking control, and the operation mode of the charger/discharger is switched from the charging/discharging control to the link voltage constant control. Thus, it is possible to maintain the electric power generated by the solar power generation facility to be the maximum electric power while controlling the link voltage to be constant.

According to the invention of claims 4 and 8, in addition to the effect obtained by the invention of claims 2 and 6, in the case where the battery is provided, when the system voltage of the electric power system is abnormal, the operation mode of the charger/discharger is made to remain in the charging/discharging control, and the operation mode of the DC/DC converter is switched from the maximum power point tracking control to the link voltage constant control. Thus, it is possible to charge or discharge the battery while controlling the link voltage to be constant.

Brief Description of Drawings

FIG. 1 is a configuration view illustrating an example of a distributed power system according to a first embodiment of the present invention.

FIG. 2 is a flowchart showing an example of operations performed by the distributed power system according to the first embodiment of the present invention.

FIG. 3 is a configuration view illustrating an example of a distributed power system according to a second embodiment of the present invention.

FIG. 4 is a configuration view illustrating a distributed power system according to a third embodiment of the present invention.

Description of Embodiments

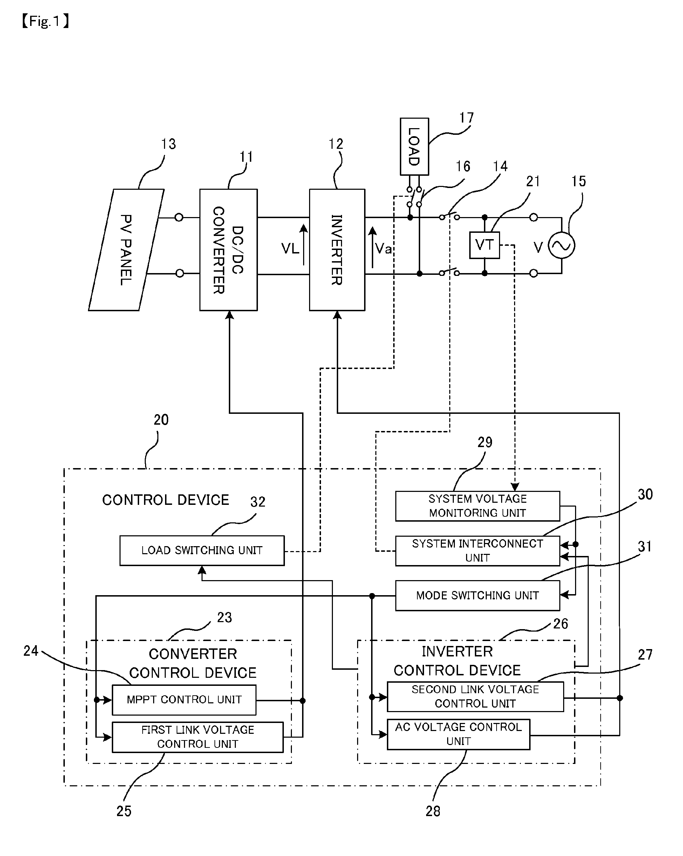

Hereinbelow, an embodiment according to the present invention will be described. FIG. 1 is a configuration view illustrating an example of a distributed power system according to a first embodiment of the present invention. In this first embodiment, a distributed power system including a single-phase inverter and connected with a single phase of a electric power system is given. The distributed power system includes solar power generation facility and a power conditioner, and is interconnected with the electric power system via a system interconnect switch.

The power conditioner includes a DC/DC converter 11 and an inverter 12, and as for the inverter 12, an inverter described, for example, in Japanese Patent Application Laid-Open Publication No. 2009-219263 is used. The inverter described in Japanese Patent Application Laid-Open Publication No. 2009-219263 is an inverter that has internal impedance and can perform autonomous parallel operation, which operates as a voltage source.

Direct current generated by a PV (Photovoltaic) panel 13 of the solar power generation facility is converted by a DC/DC converter 11 of the power conditioner into the direct current with a predetermined output voltage, is converted into alternating current by the inverter 12, and is outputted to a electric power system 15 via a system interconnect switch 14. In association with this, electric power is supplied to a load 17 connected between the inverter 12 and the system interconnect switch 14 via a load switch 16.

In the case where the output electric power from the inverter 12 is not sufficient, electric power is supplied to the load 17 from the electric power system 15 via the system interconnect switch 14. Furthermore, in the case of the self-sustaining operation by the solar power generation facility, electric power is supplied from the inverter 12 to the load 17.

Furthermore, a control device 20 controls the DC/DC converter 11 and the inverter 12, and also controls opening and closing the system interconnect switch 14 and the load switch 16. At the time of start-up of the distributed power system, the control device 20 activates the DC/DC converter 11 and the inverter 12, makes the system interconnect switch 14 closed to connect the distributed power system to the electric power system, and performs an interconnecting operation. Then, a system voltage of the electric power system detected by a voltage detector 21 is inputted and the system voltage of the electric power system 15 is monitored; and when the system voltage of the electric power system 15 is normal, an interconnecting operation in which electric power generated by the PV panel 13 of the solar power generation facility is supplied to the electric power system is continuously performed. Furthermore, the electric power is also supplied to the load 17.

Furthermore, the control device 20 has a function of switching operation modes of the DC/DC converter 11 and the inverter 12, and automatically switches the operation modes of the DC/DC converter 11 and the inverter 12 to perform the self-sustaining operation when the system voltage V of the electric power system 15 is abnormal, thereby making the electric power to be continuously supplied to the load 17. More specifically, when the system voltage of the electric power system 15 becomes abnormal during the interconnecting operation, the control device 20 makes the system interconnect switch 14 open to perform the self-sustaining operation of the distributed power system without stopping the DC/DC converter 11 and the inverter 12, thereby making the electric power to be continuously supplied to the load 17.

Here, in order to be able to disconnect the electric power system at a high speed, and rapidly shift to the self-sustaining operation mode from the interconnecting operation mode, a high-speed interconnect switch that opens and closes at high speed is used as the system interconnect switch 14. For example, IGBT or MOSFET is used. Note that, in the case where a thyristor that has increased overload capacity but does not have a self-arc-extinction function is used, a method of reducing a value of electric current running through the system interconnect switch is used, so that the electric power system can be disconnected at high speed, as described in Japanese Patent Application Laid-Open Publication No. H11-341686.

In a state of the interconnecting operation in which the distributed power system is connected with the electric power system 15, the system interconnect switch 14 is closed. During this interconnecting operation, DC electric power generated by the PV panel 13 of the solar power generation facility is DC/DC converted by the DC/DC converter 11, and then, is outputted to the inverter 12. During the interconnecting operation, the DC/DC converter 11 is operated by an MPPT control unit 24 of a converter control device 23 of the control device 20 with a maximum power point tracking control (MPPT) with which electric power generated by the PV panel 13 is the maximum.

Furthermore, when the distributed power system is in the self-sustaining operation, the converter control device 23 has a first link voltage control unit 25 that controls the DC/DC converter 11 such that a link voltage VL between the DC/DC converter 11 and the inverter 12 is a predetermined value.

As for the inverter 12, during the interconnecting operation, link voltage constant control is performed by a second link voltage control unit 27 of an inverter control device 26 of the control device 20 such that the link voltage VL between the DC/DC converter 11 and the inverter 12 is a predetermined value. Furthermore, when the distributed power system is in the self-sustaining operation, the inverter control device 26 has an AC voltage control unit 28 that controls an output voltage Va of the inverter 12 to a predetermined value.

As described above, during the interconnecting operation, the solar power generation facility is operated with the maximum power point tracking control (MPPT) by the DC/DC converter 11 with which electric power generated by the PV panel 13 is the maximum, and the inverter 12 is operated with a link voltage constant control with which the link voltage VL between the DC/DC converter 11 and the inverter 12 is controlled to a predetermined value. The reason for performing the maximum power point tracking control during the interconnecting operation is to effectively utilize the electric power generated by the PV panel 13, and the reason for performing the link voltage constant control is that electric current corresponding to the electric power generated by the PV panel 13 can be made to be outputted to the electric power system 15, as the system voltage V is constant when the system voltage V is normal.

On the other hand, in the case of the self-sustaining operation by the distributed power system, the operation mode of the DC/DC converter 11 is switched from the maximum power point tracking control to the link voltage constant control, and the operation mode of the inverter 12 is switched from the link voltage constant control to an AC output voltage control so that an output voltage Va of the inverter 12 is a predetermined value. The reason for this is to make a voltage applied to the load 17 to be a predetermined value (rated voltage), and is to perform the link voltage constant control by the DC/DC converter 11, since the operation mode of the inverter 12 becomes the AC output voltage control.

A system voltage monitoring unit 29 of the control device 20 inputs the system voltage V of the electric power system 15 detected by the voltage detector 21, and monitors the system voltage V of the electric power system 15. Monitoring the system voltage V includes: calculating an effective value Vo of the system voltage V; determining that the state is normal if the effective value Vo falls within a predetermined range set in advance; and determining that the state is abnormal if the effective value Vo falls outside the predetermined range.

In order to be able to rapidly determine the abnormality of the system voltage V and rapidly shift to the self-sustaining operation mode from the interconnecting operation mode, calculation of the effective value Vo of the system voltage V is performed by monitoring the monitor of the single-phase system voltage using a value V1, which is a value 1/4 cycle earlier of the system voltage V, and a value V0, which is a present value of the system voltage V.

For example, the value V1 {$V1 = \sqrt{2} \cdot Vo \cdot \sin(\omega t - \pi/2)$}, which is a value 1/4 cycle earlier of the system voltage V, is stored, and the effective value Vo is obtained using Equation (1) described below on the basis of the present value V0 {$V0 = \sqrt{2} \cdot Vo \cdot \sin(\omega t)$} of the system voltage V, thereby monitoring whether or not the effective value Vo falls within the predetermined range.

$$Vo = \{(V1^2 + V0^2)/2\}^{(1/2)} \quad \ldots(1)$$

As described above, the monitor of the single-phase system voltage V is monitored by using the value V1, which is a value 1/4 cycle earlier of the system voltage V, and the value V0, which is the present value of the system voltage V, and hence, the abnormality of the system voltage V can be determined in a 1/4 cycle. Thus, it is possible to rapidly shift to the self-sustaining operation mode from the interconnecting operation mode.

If the system voltage monitoring unit 29 determines that the system voltage V of the electric power system 15 is normal, the system interconnect unit 30 maintains the system interconnect switch 14 closed. Furthermore, as for an operation mode of the DC/DC converter 11 with the converter control device 23, a mode switching unit 31 maintains the operation mode by the MPPT control unit 24, and as for the operation mode of the inverter 12 with the inverter control device 26, the mode switching unit 31 maintains an operation mode by the second link voltage control unit 27. As a result, the DC/DC converter 11 continues the maximum power point tracking control with which the electric power generated by the solar power generation facility to be in the maximum, and the inverter 12 continues the link voltage constant control by an AC current control with which a link voltage VL is controlled to a predetermined value.

On the other hand, if the system voltage monitoring unit 29 determines that the system voltage V of the electric power system 15 is abnormal, the system interconnect unit 30 makes the system interconnect switch 14 open. Furthermore, the mode switching unit 31 switches the operation mode of the DC/DC converter 11 by the converter control device 23 from the operation mode by the MPPT control unit 24 to the operation mode by the first link voltage control unit 25, and switches the operation mode of the inverter 12 by the inverter control device 26 from the operation mode by the second link voltage control unit 27 to the operation mode by the AC voltage control unit 28. With these operations, the link voltage constant control is performed by the DC/DC converter 11, and the AC output voltage control with which the output voltage Va of the inverter 12 is controlled to a predetermined value is performed by the inverter 12.

A load switching unit 32 of the control device 20 operates the load switch 16 to be open and closed, and performs shedding and connection of the load 17. The load switching unit 32 is controlled by the inverter control device 26, and for example, in the case where the distributed power system is activated to supply the electric power to the load 17, the inverter control device 26 connects the load 17 via the load switching unit 32 to supply the electric power to the load 17. Furthermore, in the case where the distributed power system is stopped, the inverter control device 26 shed the load 17 via the load switching unit 32.

In the first embodiment of the present invention, if the system voltage monitoring unit 29 determines that the system voltage V of the electric power system 15 is abnormal, connection of the load 17 is maintained. The reason for this is to make it possible to supply the electric power to the load 17 without any interruption even when the system voltage V of the electric power system 17 is abnormal.

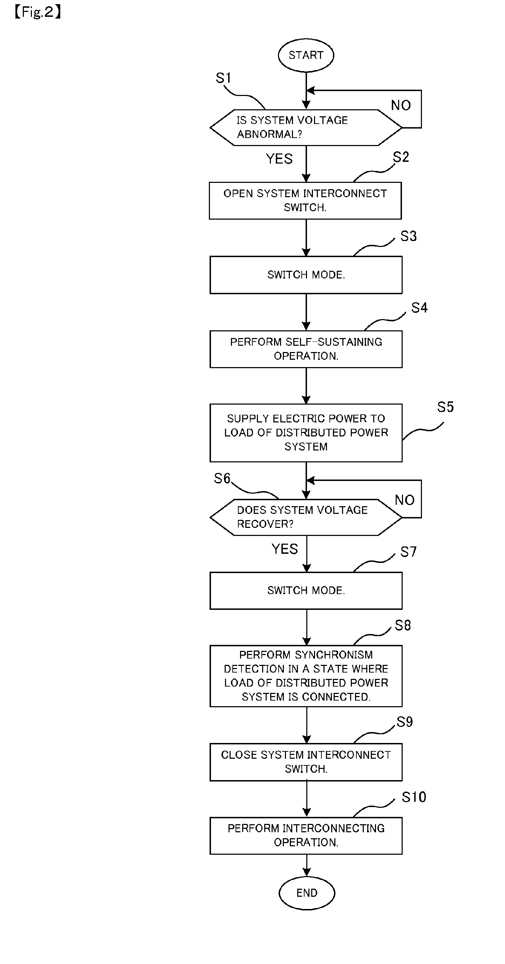

FIG. 2 is a flowchart showing an example of operations performed by the distributed power system according to the first embodiment of the present invention. First, the system voltage monitoring unit 29 of the control device 20 compares the system voltage of the electric power system detected by the voltage detector 21 with a predetermined value, and determines whether or not the system voltage is abnormal (S1). When the system voltage is abnormal, the system interconnect unit 30 makes the system interconnect switch 14 open (S2), and parallels off the distributed power system from the electric power system.

Then, the mode switching unit 31 switches the operation modes of the DC/DC converter 11 and the inverter 12 (S3). More specifically, the operation mode of the DC/DC converter 11 is switched from the maximum power point tracking control to the link voltage constant control, and the operation mode of the inverter 12 is switched from the link voltage constant control by the AC current control to the AC output voltage control with which the output voltage Va of the inverter 12 is controlled to a predetermined value.

With these operations, the DC/DC converter 11 operates with the link voltage constant control by the first link voltage control unit 25 of the converter control device 23, and the inverter 12 operates with the AC output voltage control by the AC voltage control unit 28 of the inverter control device 26. In other words, the distributed power system operates with the self-sustaining operation (S4), and the electric power is continuously supplied to the load 17 (S5).

It should be noted that, if the inverter 12 cannot maintain the output voltage Va to be the predetermined value, the AC voltage control unit 28 of the inverter control device 26 stops the inverter 12. When the electric power generated by the PV panel 13 of the solar power generation facility is not sufficient and the DC/DC converter 11 cannot maintain the constant link voltage, the inverter 12 cannot maintain the output voltage Va to be the predetermined value. At this time, the first link voltage control unit 25 of the converter control device 23 also stops the DC/DC converter 11.

During this self-sustaining operation, the system voltage monitoring unit 29 determines whether or not the system voltage V of the electric power system 15 recovers (S6). If the system voltage V recovers, the mode switching unit 31 switches the operation modes of the DC/DC converter 11 and the inverter 12 (S7). More specifically, the first link voltage control unit 25 of the converter control device 23 is switched to the MPPT control unit 24, and the AC voltage control unit 28 of the inverter control device 26 is switched to the second link voltage control unit 27. With these operations, the operation mode of the DC/DC converter 11 is switched from the link voltage constant control to the maximum power point tracking control, and the operation mode of the inverter 12 is switched from the AC output voltage control to the link voltage constant control by the AC current control.

Then, in a state where the load 17 is connected, the system interconnect unit 30 performs synchronism detection (S8), and if the output voltage Va of the inverter 30 is synchronized with the system voltage V of the electric power system 15, the system interconnect unit 30 makes the system interconnect switch 14 closed (S9) to connect the distributed power system to the electric power system 15, thereby performing the interconnecting operation (S10).

As described above, in the first embodiment of the present invention, when the system voltage V of the electric power system 15 is abnormal, the mode switching unit 31 automatically switches the operation modes of the DC/DC converter 11 and the inverter 12 without stopping the DC/DC converter 11 and the inverter 12 to make them shift to the self-sustaining operation without stopping, in a state where the load 17 is being connected, and returns to the interconnecting operation when the system voltage V of the electric power system 15 recovers. Thus, even when the system voltage V of the electric power system 15 becomes abnormal, it is possible to continuously supply the electric power to the load 17.

Therefore, it is possible to connect, as the load 17, an electric load for which shedding of the electric power supply is not allowed. For example, automated teller machines, computers, electric loads for hospital, electric loads for production lines in a plant, and so on can be connected.

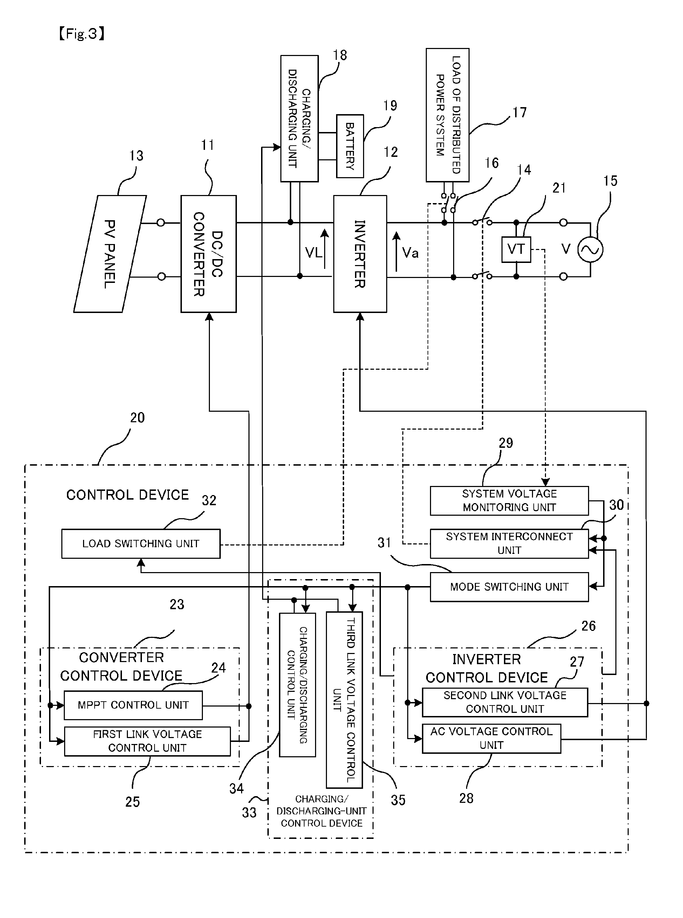

Next, a second embodiment according to the present invention will be described. FIG. 3 is a configuration view illustrating a distributed power system according to the second embodiment of the present invention. With respect to the first embodiment illustrated in FIG. 1, in this second embodiment, a charger/discharger 18 and a battery 19 are additionally provided; the control device 20 includes a charger/discharger control device 33 that controls the charger/discharger 18; and the mode switching unit 31 of the control device 20 is configured to further switch operation modes for the charger/discharger control device 33 as to whether or not the system voltage V of the electric power system 15 is normal or abnormal. Other configurations are similar to those in the first embodiment illustrated in FIG. 1. Thus, the same reference characters are attached to the same elements as those illustrated in FIG. 1, and explanations thereof will not be repeated.

In FIG. 3, between the DC/DC converter 11 and the inverter 12, the battery 19 is connected through the charger/discharger 18. The battery 19 stores DC electric power generated by the PV panel 13 of the solar power generation facility or DC electric power converted by the inverter 12 from AC electric power from the electric power system 15, and for example, supplies electric power to the load 17 via the inverter 12 to the load 17 in the case where the DC electric power generated by the PV panel 13 of the solar power generation facility is not sufficient.

The charger/discharger control device 33 of the control device 20 includes a charging/discharging control unit 34 and a third link voltage control unit 35. The charging/discharging control unit 34 controls charging/discharging of DC electric power to/from the battery 19 when the system voltage V of the electric power system 15 is normal, and the third link voltage control unit 35 controls a link voltage VL between the DC/DC converter 11 and the inverter 12 to a predetermined value when the system voltage V of the electric power system 15 is abnormal.

If the system voltage monitoring unit 29 determines that the system voltage V of the electric power system 15 is normal, the system interconnect unit 30 maintains the system interconnect switch 14 to be closed as is the case with the first embodiment. Furthermore, the mode switching unit 31 maintains the operation mode of the DC/DC converter 11 by the converter control device 23 to be an operation mode by the MPPT control unit 24, and maintains the operation mode of the inverter 12 by the inverter control device 26 to be an operation mode by the second link voltage control unit 27. In addition, the mode switching unit 31 maintains the operation mode of the charger/discharger by the charger/discharger control device 33 to be an operation mode by the charging/discharging control unit 34.

On the other hand, if the system voltage monitoring unit 29 determines that the system voltage V of the electric power system 15 is abnormal, the system interconnect unit 30 makes the system interconnect switch 14 open as is the case with the first embodiment.

Furthermore, the mode switching unit 31 makes the operation mode of the DC/DC converter 11 by the converter control device 23 to be remained in the operation mode by the MPPT control unit 24, and switches the operation mode of the inverter 12 by the inverter control device 26 from the operation mode by the second link voltage control unit 27 to the operation mode by the AC voltage control unit 28, as is the case with the first embodiment. Furthermore, the operation mode of the charger/discharger 18 by the charger/discharger control device 33 is switched to an operation mode by the third link voltage control unit 35.

In other words, unlike the first embodiment, the operation mode of the DC/DC converter 11 by the converter control device 23 is not switched from the operation mode by the MPPT control unit 24 to the operation mode by the first link voltage control unit 25. This is because the operation mode of the charger/discharger 18 by the charger/discharger control device 33 is switched to the operation mode by the third link voltage control unit 35, and the link voltage VL between the DC/DC converter 11 and the inverter 12 is controlled by the third link voltage control unit 35 of the charger/discharger control device 33 so as to be in a predetermined value.

Since the operation mode of the DC/DC converter 11 remains in the operation mode by the MPPT control unit 24, it is possible to maintain the electric power generated by the PV panel 13 of the solar power generation facility to be the maximum electric power. Thus, when there is excessive electric power generated by the PV panel 13 of the solar power generation facility, it is possible to charge the battery 19.

In the description above, if the system voltage V of the electric power system 15 is determined to be abnormal, the mode switching unit 31 maintains the operation mode of the DC/DC converter 11 by the converter control device 23 to remain in the operation mode by the MPPT control unit 24, and switches the operation mode of the charger/discharger 18 by the charger/discharger control device 33 to the operation mode by the third link voltage control unit 35. However, it may be possible to make the operation mode of the charger/discharger 18 remain in the charging/discharging control, and switch the operation mode of the DC/DC converter 11 from the maximum power point tracking control to the link voltage constant control. With this operation, the link voltage is controlled by the DC/DC converter 11 so as to be constant, and the battery 19 can be charged or discharged by the charger/discharger 18.

In the description above, description has been made of a case where the distributed power system having the single-phase inverter is connected with the single phase of the electric power system. However, similarly, application is possible to a case where a distributed power system having a three-phase inverter is connected with a three phase of a electric power system.

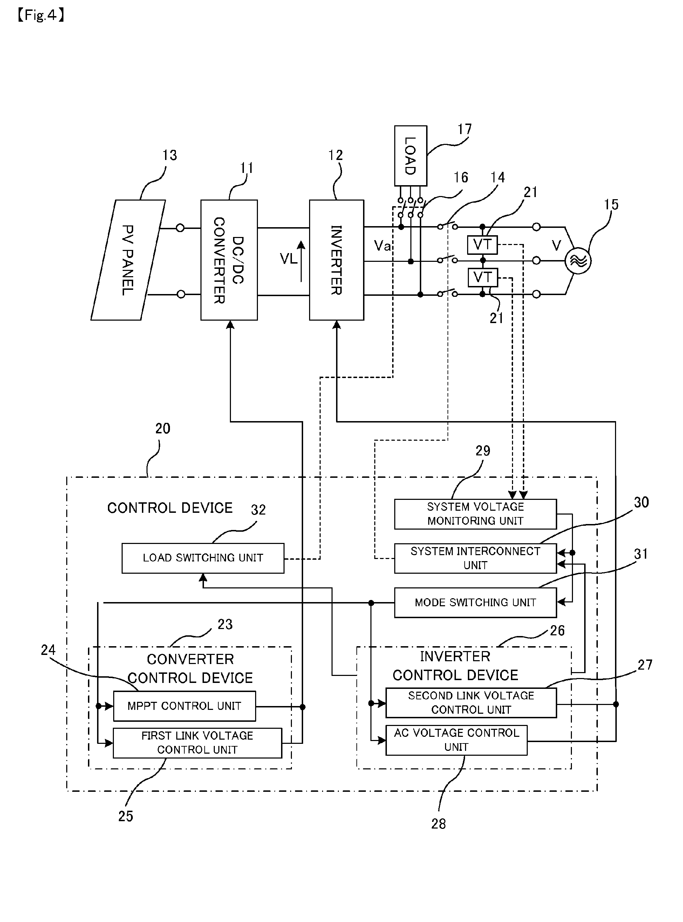

FIG. 4 is a configuration view illustrating an example of a distributed power system according to a third embodiment in the case where a distributed power system having a three-phase inverter is connected with three phases of a electric power system. With respect to the first embodiment illustrated in FIG. 1, in this third embodiment, a case where a distributed power system having a three-phase inverter is connected with three phases of a electric power system is given. The same reference characters are attached to the same elements as those in FIG. 1, and explanations thereof will not be repeated.

In the case of three phases, the inverter 12 is a three-phase inverter, and the output voltage thereof is of three phase. Thus, it is possible to connect a three-phase load as the load 17 to be connected with the inverter 12. Furthermore, a single-phase load can be connected across two phases of the three phases, or across a neutral line and one phase. FIG. 4 illustrates a case where a three-phase load is connected as the load 17.

The system voltage monitoring unit 29 of the control device 20 monitors a system voltage of the electric power system on the basis of a three-phase output voltage detected by the voltage detector 21. In this case, it may be possible to detect all three phases of the three-phase output voltage. However, it may be possible to detect any two phases of the three-phase output voltage because, in the case of the three-phase output voltage, if any two voltages are determined, the remaining one voltage is determined. FIG. 4 illustrates a case where two phases of output voltage are detected from the three-phase output voltage.

The system voltage monitoring unit 29 converts the three-phase voltage obtained by the voltage detector 21 into a two-phase voltage, and calculates an effective value Vo of the system voltage V. Then, the system voltage V is determined to be normal if this effective value Vo falls in a predetermined range set in advance, and is determined to be abnormal if this effective value Vo falls outside the predetermined range.

It should be noted that a case has been given in which, with respect to the first embodiment illustrated in FIG. 1, the distributed power system having the three-phase inverter is connected to the three phases of the electric power system. However, similarly, it may be possible to employ a configuration in which, with respect to the second embodiment illustrated in FIG. 3, the distributed power system having the three-phase inverter is connected to three phases of the electric power system.

Furthermore, in the descriptions above, a case has been given in which an inverter that has internal impedance and can perform autonomous parallel operation, which operates as a voltage source, (an inverter described in Japanese Patent Application Laid-Open Publication No. 2009-219263) is used as the inverter 12. However, it may be possible to use any already available inverter.

In the case of the already available inverter, the link voltage constant control, which is operated when the system voltage is normal, is performed with the AC current control. Then, when the system voltage becomes abnormal, the link voltage constant control is switched to an output voltage control. Thus, when the system voltage becomes abnormal, it is necessary to switch to the output voltage control from the AC current control. However, it is possible to use the already available inverter.

These are descriptions of several embodiments according to the present invention. These embodiments are given as examples, and it is not intended to limit the scope of the invention. These novel embodiments can be performed in other various modes, and various omissions, replacements, and modifications are possible within the gist of the present invention. These embodiments and modifications thereof are included in the scope of and the gist of the present invention, and are included in the invention described in the scope of claims and the scope of its equivalent.

Reference Signs List

11...DC/DC converter, 12...inverter, 13...PV panel, 14...system interconnect switch, 15...electric power system, 16...load switch, 17...load, 18...charger/discharger, 19...battery, 20...control device, 21...voltage detector, 22...mode changing switch, 23...converter control device, 24...MPPT control unit, 25...first link voltage control unit, 26...inverter control device, 27...second link voltage control unit, 28...AC voltage control unit, 29...system voltage monitoring unit, 30...system interconnect unit, 31...mode switching unit, 32...load switching unit, 33...charger/discharger control device, 34...charging/discharging control unit, 35...third link voltage control unit

## Claims

1. A distributed power system, comprising:

   a DC/DC converter that converts a direct current generated by a solar power generation facility into the direct current with a predetermined output voltage;
   an inverter that converts the direct current converted by the DC/DC converter into an alternating current, and outputs the alternating current to a electric power system via a system interconnect switch; and
   a control device that switches operation modes of the DC/DC converter and the inverter, and makes the DC/DC converter and the inverter shift to a self-sustaining operation without stopping the DC/DC converter and the inverter, when a system voltage of the electric power system is abnormal.

2. The distributed power system according to claim 1, wherein
   the control device includes:

   a system voltage monitoring unit configured to monitor whether or not the system voltage of the electric power system is normal;
   a converter control device that controls the DC/DC converter with a maximum power point tracking control mode in which electric power generated by the solar power generation facility is the maximum, or with a link voltage constant control mode in which a link voltage between the DC/DC converter and the inverter is controlled to a predetermined value;
   an inverter control device that controls the inverter with an AC output voltage control mode in which an output voltage of the inverter is controlled to a predetermined value, or with a link voltage constant control mode in which a link voltage between the DC/DC converter and the inverter is controlled to a predetermined value; and
   a mode switching unit configured to switch control modes of the converter control device and the inverter control device, and switches operation modes of the DC/DC converter and the inverter, and wherein
   the mode switching unit;
   sets a control mode of the converter control device to the maximum power point tracking control mode in which electric power generated by the solar power generation facility is the maximum, and sets a control mode of the inverter control device to the link voltage constant control, when the system voltage monitoring unit determines that the system voltage of the electric power system is normal; and
   switches the control mode of the converter control device from the maximum power point tracking control mode to the link voltage constant control mode, and switches the control mode of the inverter control device from the link voltage constant control mode to the AC output voltage control mode in which the output voltage of the inverter is controlled to a predetermined value, when the system voltage monitoring unit determines that the system voltage of the electric power system is abnormal.

3. The distributed power system according to claim 2, further comprising:

   a battery that stores a direct current converted by the DC/DC converter or a direct current converted by the inverter from an alternating current of the electric power system; and
   a charger/discharger that controls charging or discharging of the battery, wherein
   the control device includes a charger/discharger control device that controls the charger/discharger with a charging/discharging control mode in which the charging or discharging of the battery is controlled, or with a link voltage constant control mode in which a link voltage between the DC/DC converter and the inverter is controlled to a predetermined value, and wherein
   the mode switching unit:

   sets the control mode of the charger/discharger by the charger/discharger control device to the charging/discharging control mode, when the system voltage monitoring unit determines that the system voltage of the electric power system is normal; and makes the control mode by the converter control device remain in the maximum power point tracking control mode, and switches the control mode of the charger/discharger from the charging/discharging control mode to the link voltage constant control mode, when the system voltage monitoring unit determines that the system voltage of the electric power system is abnormal.

**4.** The distributed power system according to claim 3, wherein
when the system voltage monitoring unit determines that the system voltage of the electric power system is abnormal, the mode switching unit makes the control mode of the charger/discharger remain in the charging/discharging control control, and switches the control mode of the DC/DC converter from the maximum power point tracking control mode to the link voltage constant control mode, in place of making the control mode by the converter control device remain in the maximum power point tracking control mode, and switching the control mode of the charger/discharger from the charging/discharging control mode to the link voltage constant control mode.

**5.** An operation method of a distributed power system, comprising the steps of:

converting, by a DC/DC converter, a direct current generated by a solar power generation facility into the direct current with a predetermined output voltage;
converting, by an inverter, the direct current converted by the DC/DC converter into alternating current and outputting the alternating current to a electric power system via a system interconnect switch; and
switching operation modes of the DC/DC converter and the inverter when a system voltage of the electric power system is abnormal; and
making the DC/DC converter and the inverter shift to a self-sustaining operation without stopping the DC/DC converter and the inverter.

**6.** An operation method of a distributed power system that converts, by a DC/DC converter, a direct current generated by a solar power generation facility into the direct current with a predetermined output voltage, converts, by an inverter, the direct current converted by the DC/DC converter into alternating current, and outputs the alternating current to a electric power system via a system interconnect switch, the method comprising the steps of:

setting an operation mode of the DC/DC converter to a maximum power point tracking control mode in which electric power generated by the solar power generation facility is the maximum, and setting an operation mode of the inverter to a link voltage constant control mode in which a link voltage between the DC/DC converter and the inverter is controlled to a predetermined value, when a system voltage of the electric power system is normal; and
switching the operation mode of the DC/DC converter from the maximum power point tracking control mode to the link voltage constant control mode, and switching the operation mode of the inverter from the link voltage constant control mode to an AC output voltage control mode in which the output voltage of the inverter is controlled to a predetermined value, when the system voltage of the electric power system is abnormal.

**7.** The operation method of a distributed power system according to claim 6, further comprising the steps of:

in the case where a battery that stores the direct current converted by the DC/DC converter or the direct current converted from the alternating current of the electric power system by the inverter is provided,
setting an operation mode of the battery to a charging/discharging control mode when a system voltage of the electric power system is normal; and
making the operation mode of the DC/DC converter to remain in the maximum power point tracking control mode and switching the operation mode of the battery from the charging/discharging control mode to the link voltage constant control mode when the system voltage of the electric power system is abnormal.

**8.** The method of operating a distributed power system according to claim 7, further comprising the steps of:

when the system voltage of the electric power system is determined to be abnormal, making the operation mode of the battery remain in the charging/discharging control control, and switching the operation mode of the DC/DC converter from the maximum power point tracking control mode to the link voltage constant control mode, in place of making the operation mode of DC/DC converter remain in the maximum power point tracking control mode, and switching the operation mode of the battery from the charging/discharging control mode to the link voltage constant control mode.

【Fig.1】

13
11
12
17
LOAD
16
14
21
15
PV PANEL
DC/DC CONVERTER
VL
INVERTER
Va
VT
V
20
CONTROL DEVICE
32
LOAD SWITCHING UNIT
29
SYSTEM VOLTAGE MONITORING UNIT
30
SYSTEM INTERCONNECT UNIT
31
MODE SWITCHING UNIT
23
CONVERTER CONTROL DEVICE
24
MPPT CONTROL UNIT
FIRST LINK VOLTAGE CONTROL UNIT
25
26
INVERTER CONTROL DEVICE
27
SECOND LINK VOLTAGE CONTROL UNIT
AC VOLTAGE CONTROL UNIT
28

【Fig.2】

START
S1
IS SYSTEM VOLTAGE ABNORMAL?
NO
YES
S2
OPEN SYSTEM INTERCONNECT SWITCH.
S3
SWITCH MODE.
S4
PERFORM SELF-SUSTAINING OPERATION.
S5
SUPPLY ELECTRIC POWER TO LOAD OF DISTRIBUTED POWER SYSTEM
S6
DOES SYSTEM VOLTAGE RECOVER?
NO
YES
S7
SWITCH MODE.
S8
PERFORM SYNCHRONISM DETECTION IN A STATE WHERE LOAD OF DISTRIBUTED POWER SYSTEM IS CONNECTED.
S9
CLOSE SYSTEM INTERCONNECT SWITCH.
S10
PERFORM INTERCONNECTING OPERATION.
END

【Fig.3】

CHARGING/ DISCHARGING UNIT
18
BATTERY
19
LOAD OF DISTRIBUTED POWER SYSTEM
17
13
11
12
16
14
21
15
PV PANEL
DC/DC CONVERTER
VL
INVERTER
Va
VT
V
20
CONTROL DEVICE
32
LOAD SWITCHING UNIT
29
SYSTEM VOLTAGE MONITORING UNIT
30
SYSTEM INTERCONNECT UNIT
31
MODE SWITCHING UNIT
23
CONVERTER CONTROL DEVICE
24
MPPT CONTROL UNIT
FIRST LINK VOLTAGE CONTROL UNIT
25
CHARGING/DISCHARGING CONTROL UNIT
THIRD LINK VOLTAGE CONTROL UNIT
34
33
CHARGING/ DISCHARGING-UNIT CONTROL DEVICE
35
26
INVERTER CONTROL DEVICE
27
SECOND LINK VOLTAGE CONTROL UNIT
AC VOLTAGE CONTROL UNIT
28

【Fig.4】

13
PV PANEL
11
DC/DC CONVERTER
VL
12
INVERTER
Va
17
LOAD
16
14
21
VT
VT
21
V
15
20
CONTROL DEVICE
32
LOAD SWITCHING UNIT
29
SYSTEM VOLTAGE MONITORING UNIT
30
SYSTEM INTERCONNECT UNIT
31
MODE SWITCHING UNIT
23
CONVERTER CONTROL DEVICE
24
MPPT CONTROL UNIT
FIRST LINK VOLTAGE CONTROL UNIT
25
26
INVERTER CONTROL DEVICE
27
SECOND LINK VOLTAGE CONTROL UNIT
AC VOLTAGE CONTROL UNIT
28

## INTERNATIONAL SEARCH REPORT

International application No. PCT/JP2013/069739

A. CLASSIFICATION OF SUBJECT MATTER

*H02J3/38*(2006.01)i

According to International Patent Classification (IPC) or to both national classification and IPC

B. FIELDS SEARCHED

Minimum documentation searched (classification system followed by classification symbols)

H02J3/38

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2000-041336 A (Nissin Electric Co., Ltd.), 08 February 2000 (08.02.2000), paragraphs [0002] to [0007]; fig. 2 (Family: none) | 1-2,5-6<br>3-4,7-8 |
| Y | JP 2000-184602 A (Nissin Electric Co., Ltd.), 30 June 2000 (30.06.2000), claim 1; paragraphs [0038] to [0041], [0048] to [0049] (Family: none) | 1-2,5-6 |
| Y | JP 2012-010532 A (Mitsubishi Electric Corp.), 12 January 2012 (12.01.2012), paragraphs [0015], [0017] to [0018] (Family: none) | 1-2,5-6 |

☒ Further documents are listed in the continuation of Box C. ☐ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| | |
|---|---|
| Date of the actual completion of the international search<br>18 September, 2013 (18.09.13) | Date of mailing of the international search report<br>01 October, 2013 (01.10.13) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No. PCT/JP2013/069739

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2008/026425 A1 (Sharp Corp.), 06 March 2008 (06.03.2008), paragraphs [0011], [0020] & US 2009/0236916 A1 & EP 2058921 A1 | 2,6 |
| A | JP 2002-354677 A (Japan Storage Battery Co., Ltd.), 06 December 2002 (06.12.2002), paragraphs [0017] to [0020]; fig. 1 (Family: none) | 3-4,7-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11341686 B
- JP 2009219263 A